# EUROPÄISCHE PATENTSCHRIFT

(11) **EP 1 529 247 B1**
(45) Veröffentlichungstag und Bekanntmachung des Hinweises auf die Patenterteilung: **04.11.2009**
(21) Anmeldenummer: 03792189.7
(22) Anmeldetag: 09.07.2003
(51) Int. Cl.: G03G 9/097, C09D 5/03, D01F 1/10, B03C 7/00

(54) **VERWENDUNG VON SALZEN SCHICHTARTIGER DOPPELHYDROXIDE, ELEKTROPHOTOGRAPHISCHER TONER, PULVER UND PULVERLACK**
USE OF SALTS OF LAYERED DOUBLE HYDROXIDES, ELECTROPHOTOGRAPHIC TONER, POWDER, POWDER COATING
EMPLOI DE SELS DE DOUBLES HYDROXYDES EN COUCHES, TONER ÉLECTROPHOTOGRAPHIQUE, POUDRE, LAQUE EN POUDRE,

(30) Priorität: 03.08.2002 DE 10235570
(43) Veröffentlichungstag der Anmeldung: 11.05.2005
(73) Patentinhaber: Clariant Produkte (Deutschland) GmbH, 65929 Frankfurt am Main (DE)
(72) Erfinder: MICHEL, Eduard, 60529 Frankfurt am Main (DE); BAUR, Rüdiger, 65817 Eppstein/Ts. (DE); MACHOLDT, Hans-Tobias, 64297 Darmstadt-Eberstadt (DE)
(86) Internationale Anmeldenummer: PCT/EP2003/007424
(87) Internationale Veröffentlichungsnummer: WO 2004/019138

(56) Entgegenhaltungen:
- EP-A- 0 957 407
- EP-A- 0 962 560
- WO-A-01/40878
- US-A- 5 288 581
- US-A- 5 728 366
- US-A- 5 969 028
- US-B1- 6 207 335
- DATABASE WPI Section Ch, Week 200151 Derwent Publications Ltd., London, GB; Class A10, AN 2001-467709 XP002256860 & JP 2001 081374 A (SONY), 27. März 2001 (2001-03-27)

## Beschreibung

Die vorliegende Erfindung liegt auf dem Gebiet der Ladungssteuermittel im Sinne einer Komponente, die das elektrostatische Aufladungsverhalten in einer Matrix selektiv beeinflusst.

Bei elektrophotographischen Aufzeichnungsverfahren wird auf einem Photoleiter ein "latentes Ladungsbild" erzeugt. Dieses "latente Ladungsbild" wird durch Aufbringen eines elektrostatisch geladenen Toners entwickelt, der dann beispielsweise auf Papier, Textilien, Folien oder Kunststoff übertragen und beispielsweise mittels Druck, Strahlung, Hitze oder Lösungsmitteleinwirkung fixiert wird. Typische Toner sind Ein- oder Zweikomponentenpulvertoner (auch Ein- oder Zweikomponentenentwickler genannt), darüber hinaus sind noch Spezialtoner, wie z.B. Magnettoner, Flüssigtoner oder Polymerisationstoner im Einsatz. Unter Polymerisationstonern sind solche Toner zu verstehen, die z.B. durch Suspensionspolymerisation (Kondensation) oder Emulsionspolymerisation entstehen und zu verbesserten Teilcheneigenschaften des Toners führen. Weiterhin sind auch solche Toner gemeint, die grundsätzlich in nicht-wässrigen Dispersionen erzeugt werden.

Ein Maß für die Tonerqualität ist seine spezifische Aufladung q/m (Ladung pro Masseeinheit). Neben Vorzeichen und Höhe der elektrostatischen Aufladung ist das schnelle Erreichen der gewünschten Ladungshöhe, die Konstanz dieser Ladung über einen längeren Aktivierzeitraum sowie die Unempfindlichkeit des Toners gegen Klimaeinflüsse, wie Temperatur und Luftfeuchtigkeit ein wichtiges Qualitätskriterium.
Sowohl positiv als auch negativ aufladbare Toner finden Verwendung in Kopierern und Laserdruckern in Abhängigkeit vom Verfahrens- und Gerätetyp.

Um elektrophotographische Toner oder Entwickler mit entweder positiver oder negativer Aufladung zu erhalten, werden häufig Ladungssteuermittel zugesetzt.

Da Tonerbindemittel oftmals eine starke Abhängigkeit der Aufladung von der Aktivierzeit aufweisen, ist es Aufgabe eines Ladungssteuermittels, zum einen Vorzeichen und Höhe der Toneraufladung einzustellen und zum anderen der Aufladungsdrift des Tonerbindemittels entgegenzuwirken und für Konstanz der Toneraufladung zu sorgen. Darüber hinaus ist für die Praxis wichtig, dass die Ladungssteuermittel eine ausreichende Thermostabilität und eine gute Dispergierbarkeit besitzen. Typische Einarbeitungstemperaturen für Ladungssteuermittel in die Tonerharze liegen bei Verwendung von Knetern oder Extrudern zwischen 100 und 200°C. Dementsprechend ist eine Thermostabilität von 200°C von großem Vorteil. Wichtig ist auch, dass die Thermostabilität über einen längeren Zeitraum (ca. 30 Minuten) und in verschiedenen Bindemittelsystemen gewährleistet ist.

Für eine gute Dispergierbarkeit ist es von Vorteil, wenn das Ladungssteuermittel keine wachsartigen Eigenschaften, keine Klebrigkeit und einen Schmelz- oder Erweichungspunkt von > 150°C, besser > 200°C, aufweist. Klebrigkeit führt häufig zu Problemen beim Zudosieren in die Tonerformulierung, und niedrige Schmelz- oder Erweichungspunkte können dazu führen, dass beim Eindispergieren keine homogene Verteilung erreicht wird, da sich das Material tröpfchenförmig im Trägermaterial zusammenschließt.

Typische Tonerbindemittel sind Polymerisations-, Polyadditions- und Polykondensationsharze wie Styrol-, Styrolacrylat-, Styrolbutadien-, Acrylat-; Polyester-, Phenol-Epoxidharze, sowie Cycloolefincopolymere, einzeln oder in Kombination, die noch weitere Inhaltsstoffe, z.B. Farbmittel, wie Farbstoffe und Pigmente, Wachse oder Fließhilfsmittel, enthalten können oder im Nachhinein zugesetzt bekommen können, wie hochdisperse Kieselsäuren.

Ladungssteuermittel können auch zur Verbesserung der elektrostatischen Aufladung von Pulvern und Lacken, insbesondere in triboelektrisch oder elektrokinetisch versprühten Pulverlacken, wie sie zur Oberflächenbeschichtung von Gegenständen aus beispielsweise Metall, Holz, Kunststoff, Glas, Keramik, Beton, Textilmaterial, Papier oder Kautschuk zur Anwendung kommen, eingesetzt werden. Der Pulverlack oder das Pulver erhält seine elektrostatische Aufladung im allgemeinen nach einem der beiden folgenden Verfahren:
Beim Corona-Verfahren wird der Pulverlack oder das Pulver an einer geladenen Corona vorbeigeführt und hierbei aufgeladen, beim triboelektrischen oder elektrokinetischen Verfahren wird vom Prinzip der Reibungselektrizität Gebrauch gemacht. Auch eine Kombination von beiden Verfahren ist möglich.
Der Pulverlack oder das Pulver erhalten im Sprühgerät eine elektrostatische Aufladung, die der Ladung des Reibungspartners, im allgemeinen ein Schlauch oder Sprührohr, beispielsweise aus Polytetrafluorethylen, entgegengesetzt ist.

Als Pulverlackharze werden typischerweise Epoxidharze, carboxyl- und hydroxylgruppenhaltige Polyesterharze, Polyurethan- und Acrylharze zusammen mit den üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt.

Darüber hinaus ist gefunden worden, dass Ladungssteuermittel das Aufladungssowie das Ladungsstabilitätsverhalten von Elektretmaterialien, insbesondere Elektretfasern, erheblich verbessern können (DE-A-43 21 289). Typische Elektretmaterialien basieren auf Polyolefinen, halogenierten Polyolefinen, Polyacrylaten, Polyacrylnitrilen, Polystyrolen oder Fluorpolymeren, wie beispielsweise Polyethylen, Polypropylen, Polytetrafluorethylen und perfluoriertes Ethylen und Propylen, oder auf Polyestern, Polycarbonaten, Polyamiden, Polyimiden, Polyetherketonen, auf Polyarylensulfiden, insbesondere Polyphenylensulfiden, auf Polyacetalen, Celluloseestern, Polyalkylenterephthalaten sowie Mischungen daraus. Elektretmaterialien, - insbesondere Elektretfasern, können beispielsweise zur (Feinst-)Staubfiltration eingesetzt werden. Die Elektretmaterialien können ihre Ladung durch Corona- oder Triboaufladung erhalten.

Weiterhin können Ladungssteuermittel in elektrostatischen Trennvorgängen, insbesondere in Trennvorgängen von Polymeren verwendet werden. Ohne Ladungssteuermittel laden sich "Low Density Polyethylen (LDPE)" und "High Density Polyethylen" (HDPE) reibungselektrisch weitestgehend ähnlich auf. Nach Ladungssteuermittelzugabe laden sich LDPE stark positiv und HDPE stark negativ auf und lassen sich so gut trennen. Neben der äußerlichen Aufbringung der Ladungssteuermittel ist auch eine Einarbeitung derselben in das Polymer möglich, um beispielsweise ein Polymer innerhalb der triboelektrischen Spannungsreihe zu verschieben und eine entsprechende Trennwirkung zu erhalten. Ebenso lassen sich auf diese Weise andere Polymere wie z.B. Polypropylen (PP) und/oder Polyethylenterephthalat (PET) und/oder Polyvinylchlorid (PVC) voneinander trennen.

Auch Salzmineralien lassen sich trennen, wenn ihnen zuvor ein Mittel zugegeben wurde (Oberflächenkonditionierung), das die substratspezifische elektrostatische Aufladung verbessert (A. Singewald et al., Zeitschrift für Physikal. Chem., Bd. 124, S. 223 - 248 (1981)).

Weiterhin werden Ladungssteuermittel als "Electroconductivity Providing Agents" (ECPA) (JP-05-163 449) in Tinten für Tintenstrahldrucker eingesetzt.
Außerdem sind die besagten Doppelhydroxide als Ladungssteuermittel in Farbfiltern für die additive oder subtraktive Farberzeugung, sowie in "Electronic Inks" für "Electronic Newspapers" geeignet.

Zusätzlich können Ladungssteuermittel zur Oberflächenmodifizierung von Free Flow Agents, wie hochdispersen Kieselsäuren in ihrer pyrogenen wie gefällten Form, oder Metalloxiden, wie Titandioxid, verwendet werden. Hierbei wird eine Optimierung der physikalischen Eigenschaften, wie reibungselektrischem Ladungsverhalten, bewirkt. Free Flow Agents werden nachträglich dem Toner zudosiert, um bessere Rieselfähigkeit zu erzeugen.

In der US-A-6,207,335 werden Metallcarboxylate und -sulfate als ladungssteuernde Additive eingesetzt.
In der US-A-5,288,581 werden bestimmte Hydrotalcite als ladungssteuernde Additive eingesetzt.
In JP 10-090 941 wird die Verwendung eines hydrophobisierten Hydrotalcits als externes Additiv in Kombination mit einem positiven Ladungssteuermittel beschrieben. Dabei dient das Additiv primär zur Verbesserung der Rieselfähigkeit des Toners.
Aufgabe der vorliegenden Erfindung war es, wirksame und ökotoxikologisch verträgliche Ladungssteuermittel zu finden, die insbesondere eine hohe Schnellaufladung und hohe Ladungsstabilität aufweisen. Weiterhin sollten sie in verschiedenen praxisnahen Tonerbindemitteln wie Polyestern, Polystyrolacrylaten oder Polystyrolbutadienen/Epoxidharzen sowie Cycloolefincopolymeren gut und unzersetzt dispergierbar sein. Weiterhin sollte ihre Wirkung weitgehend unabhängig von der Harz/Carrier-Kombination sein, um eine breite Anwendung zu erschließen. Ebenso sollten sie in gängigen Pulverlack-Bindemitteln und Elektretmaterialien wie z.B. Polyester (PES), Epoxid, PES-Epoxyhybrid, Polyurethan, Acrylsystemen sowie Polypropylenen gut und unzersetzt dispergierbar sein.

Bezüglich ihrer elektrostatischen Effizienz sollten die Ladungssteuermittel bereits bei möglichst geringer Konzentration (1 % oder kleiner) wirksam sein und diese Effizienz in Verbindung mit Ruß oder anderen Farbmitteln nicht verlieren. Von Farbmitteln ist bekannt, dass sie die triboelektrische Aufladung von Tonern teilweise nachhaltig beeinflussen können.

Überraschenderweise hat sich nun gezeigt, dass nachstehend beschriebene Salze schichtartiger Doppelhydroxide vorteilhafte Ladungssteuereigenschaften insbesondere für negative Aufladung und hohe Thermostabilitäten besitzen, wobei die Ladungssteuereigenschaft weder durch Kombination mit Ruß oder anderen Farbmitteln verloren geht. Darüber hinaus sind die Verbindungen mit den üblichen Toner-, Pulverlack- und Elektretbindemitteln gut verträgtich und lassen sich leicht dispergieren.

Gegenstand der vorliegenden Erfindung ist die Verwendung von schichtartigen Doppelhydroxid-Salzen als Ladungssteuermittel in elektrophotographischen Tonern und Entwicklern, in Pulverlacken, Elektretmaterialien und in elektrostatischen Trennvorgängen von aufladbaren Materialien, wie z.B. Polymeren, **dadurch gekennzeichnet, dass** das Doppelhydroxid-Salz einwertige oder zweiwertige Metallkationen oder eine Mischung davon, sowie dreiwertige Metallkationen, sowie organische Anionen A der nachstehenden Formeln enthält 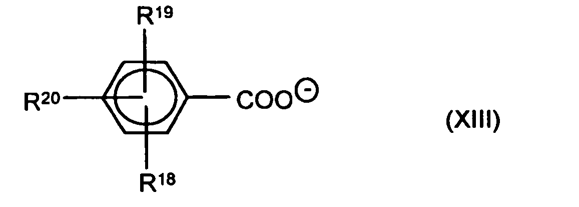 worin R¹⁸, R¹⁹ und R²⁰ gleich oder verschieden sind und Wasserstoff, C₁-C₂₂-Alkyl, C₁-C₁₈-Alkenyl, C₁-C₁₈-Alkoxy bedeuten; 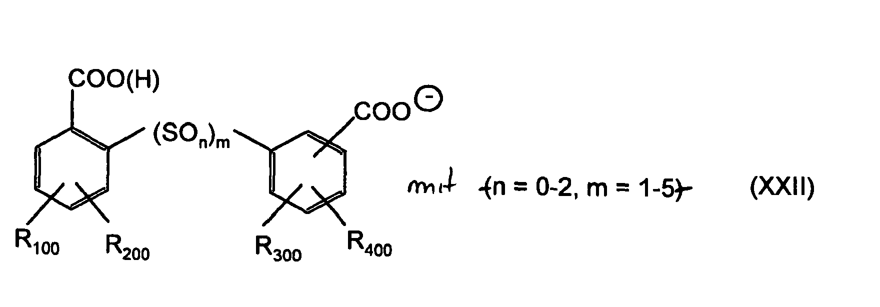 worin die Reste R₁₀₀ bis R₄₀₀ gleich oder verschieden sind und Wasserstoff, C₁-C₂₂-Alkyl, C₁-C₁₈-Alkenyl, C₁-C₁₈-Alkoxy, Hydroxy-(C₁-C₁₈)alkylen, Amino-(C₁-C₁₈)-alkylen, C₁-C₁₈-Alkylimino, Carboxy, Carboxy(C₁-C₁₈)-alkylen-, Hydroxy, Amino, Nitro, Cyano, Sulfo, Halogen, C₁-C₁₈-Acyl, C₁-C₁₈-Halogenalkyl, C₁-C₁₈-Alkylcarbonyl, C₁-C₁₈-Alkylcarbonyloxy, C₁-C₁₈-Alkoxycarbonyl, C₁-C₁₈-Alkylaminocarbonyl, C₁-C₁₈-Alkylcarbonylimino, C₆-C₁₀-Arylcarbonyl, Aminocarbonyl, Aminosulfonyl, C₁-C₁₈-Alkylaminosulfonyl, Phenyl, Naphthyl, Heteroaryl, z.B. Pyridyl, Imidazolyl, Triazinyl, Pyrimidinyl, bedeuten; 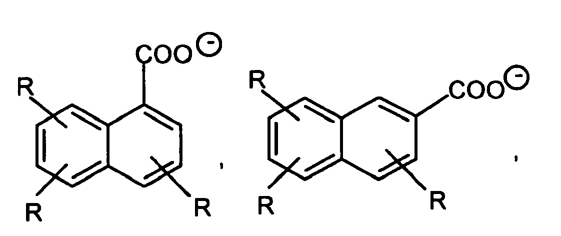 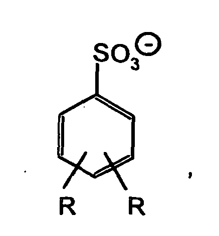 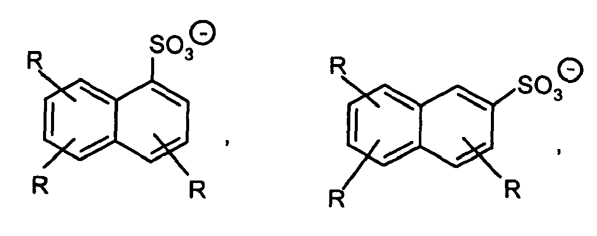 worin R Wasserstoff, C₁-C₄-Alkyl, C₁-C₄-Alkoxy oder Halogen bedeutet.

Verbindungen in diesem Sinne sind beispielsweise die Anionen folgender Säuren: Benzoesäure, Naphthoesäure, 4-tert.-Butylbenzoesäure, Benzolsulfonsäure, p-Toluolsulfonsäure, Naphthalinsulfonsäure, 2,2'-Dithiobenzoesäure.

Das besagte Doppelhydroxid-Salz ist dadurch gekennzeichnet, dass die Anzahl der Hydroxygruppen etwa das 1,8 bis 2,2-fache, bevorzugt das etwa 2-fache, der Summe aller Metallkationen beträgt.
Das molare Verhältnis der ein- und/oder zweiwertigen Metallkationen zu den dreiwertigen Metallkationen kann zwischen 10⁴ und 10⁻⁴, bevorzugt zwischen 10 und 0,1, insbesondere zwischen 5 und 0,2, liegen.
Das Verhältnis der einwertigen zu den zweiwertigen Metallkationen kann beliebig sein, bevorzugt sind jedoch Doppelhydroxid-Salze, die ausschließlich zweiwertige Metallkationen oder eine Mischung aus ein- und zweiwertigen Metallkationen enthalten.
A kann ein einfach oder mehrfach geladenes organisches Anion sein. Die Menge der Anionen A wird durch die Stöchiometrie der positiven und negativen Ladungen im Doppelhydroxid-Salz so bestimmt, dass die Summe aller Ladungen Null ergibt. Es ist jedoch möglich, dass ein Teil, beispielsweise 0,1 bis 99 Mol-%, insbesondere 1 bis 90 Mol-%, der Anionen durch andere Anionen, wie z.B. anorganische Anionen, wie Halogenid, Carbonat, Sulfat, Nitrat, Phosphat oder Borat, ersetzt ist.

Die erfindungsgemäß verwendeten Doppelhydroxid-Salze können auch Wassermoleküle als Kristallwasser oder eingelagert zwischen einzelnen Schichten enthalten.

Als einwertige Metallkationen kommen insbesondere Alkalimetallkationen, wie Li⁺, Na⁺ oder K⁺, in Betracht.
Als zweiwertige Metallkationen kommen insbesondere Mg²⁺, Ca²⁺, Zn²⁺, Co²⁺, Ni²⁺, Fe²⁺, Cu²⁺ oder Mn²⁺ in Betracht.
Als dreiwertige Metallkationen kommen insbesondere Al³⁺, Fe³⁺, Co³⁺, Mn³⁺, Ni³⁺, Cr³⁺ sowie B³⁺ in Betracht.

Besonders bevorzugt sind Doppelhydroxid-Salze, die Mg²⁺ und Al³⁺ enthalten, insbesondere im molaren Verhältnis 3,1:1 bis 1:2. Ausgangsprodukte für Doppelhydroxide im Sinne der vorliegenden Erfindung sind Hydrotalcite, die meist kommerziell erhältlich sind und ein anorganisches Anion, meist Carbonat, enthalten. Durch geeignete Methoden, wie z.B. Umsetzung in wässriger, organischer, z.B. alkoholischer, oder wässrig-organischer Suspension mit den entsprechenden organischen Anionen, z.B. in Form ihrer Salze, können aus diesen kommerziellen Produkten die erfindungsgemäß verwendeten
Doppelhydroxid-Salze hergestellt werden.
In einer bevorzugten Ausführungsform wird das so hergestellte Hydrotalcit calciniert, d.h. auf eine Temperatur von 150 bis 1000°C, gegebenenfalls unter vermindertem Druck, erhitzt.

Besonders bevorzugt sind Doppelhydroxid-Salze mit einem molaren Verhältnis Mg : Al von etwa 3:1, etwa 2:1, etwa 5:4 oder etwa 1:2 sowie die calcinierten Formen davon.

Die Salze schichtartiger Doppelhydroxide werden zweckmäßigerweise in wässrigem Medium in einem pH-Wert von 3 bis 14 und bei einer Temperatur zwischen 0 und 100°C, vorzugsweise unter Rührung und gegebenenfalls auch unter Druck hergestellt. Gegebenenfalls kann die Herstellung auch unter Autoklav-Bedingungen erfolgen, d.h. unter Drücken zwischen 1,1 und 1000 bar, vorzugsweise zwischen 1,1 und 500 bar, insbesondere zwischen 1,1 und 200 bar, sowie bei Temperaturen zwischen 20 und 200°C, vorzugsweise zwischen 30 und 190°C, insbesondere zwischen 40 und 180°C.
Das oder die angesetzten organischen Anionen werden zweckmäßigerweise in equimolaren Mengen eingesetzt, jedoch ist auch ein 0,1 bis 99,9 %iger Unterschuss möglich. Die organischen Anionen können dabei direkt als Salz, z.B. als Natrium- oder Kaliumsalz oder aber als Säure in der protonierten Form eingesetzt werden, wobei im letzteren Fall gegebenenfalls eine pH-Einstellung mittels einer Base wie beispielsweise Natrium- oder Kaliumhydroxid oder - carbonat notwendig ist, um eine bessere Verteilung der Säure im wässrigen Medium zu gewährleisten. Die organischen Anionen können auch als Säurehalogenide, Säureanhydride, Säureazide oder Säureester eingesetzt werden. Dies gilt insbesondere für die Herstellung in organischen Lösemitteln. Ferner können die erfindungsgemäss beschriebenen Verbindungen auch hergestellt werden durch direkte Umsetzung der calcinierten oder uncalcinierten Doppelhydroxide mit den entsprechenden organischen Säuren oder deren Salzen unter Erwärmung in einem Mischaggregat, wie beispielsweise einem Kneter, Extruder, Dissolver, einer Perlmühle, einem Henschel-Mischer oder einer Mühle. Ferner ist die Herstellung auch möglich durch die Reaktion von Salzen der Doppelhydroxid-aufbauenden Metallkationen, wie beispielsweise Magnesiumchlorid und Aluminiumchlorid, in wässriger Lösung von Alkalihydroxid mit der Säure oder dem Salz der organischen Anionen.

Die erfindungsgemäß verwendeten Salze schichtartiger Doppelhydroxide können genau auf das jeweilige Harz/Toner-System abgestimmt werden. Ein weiterer technischer Vorteil dieser Verbindungen liegt darin, dass sie sich gegenüber den unterschiedlichen Bindemittelsystemen inert verhalten und somit vielfältig einsetzbar sind, wobei von besonderer Bedeutung ist, dass sie nicht in der Polymermatrix gelöst sind, sondern als kleine, feinstverteilte Festkörper vorliegen.
Ferner zeigen sie hohe und oftmals sehr konstante Ladungssteuereigenschaften sowie sehr gute Thermostabilitäten. Weiterhin sind die erfindungsgemäß eingesetzten Doppelhydroxide rieselfähig und besitzen eine gute Dispergierbarkeit.

Dispergierung bedeutet die Verteilung eines Stoffes in einem anderen, im Sinne der Erfindung die Verteilung eines Ladungssteuermittels im Tonerbindemittel, Pulverlackbindemittel oder Elektretmaterial.
Es ist bekannt, dass kristalline Stoffe in ihrer gröbsten Form als Agglomerate vorliegen. Um eine homogene Verteilung im Bindemittel zu erreichen, müssen diese durch den Dispergiervorgang in kleinere Aggregate oder idealerweise in Primärteilchen zerteilt werden. Die Ladungssteuermittel-Partikel, die nach der Dispergierung im Bindemittel vorliegen, sollten kleiner als 1 µm, vorzugsweise kleiner als 0,5 µm, sein, wobei eine enge Teilchengrößen-Verteilung von Vorteil ist.
Für die Teilchengröße, definiert durch den d₅₀-Wert, finden sich stoffabhängig optimale Wirkbereiche. So sind beispielsweise grobe Teilchen (1 mm) zum Teil gar nicht oder nur mit einem erheblichen Zeit- und Energieaufwand dispergierbar, während sehr feine Teilchen im Submicron-Bereich ein erhöhtes sicherheitstechnisches Risiko, wie die Möglichkeit der Staubexplosion, bergen.

Die Teilchengröße und Form wird entweder durch die Synthese und/oder Nachbehandlung eingestellt und modifiziert. Häufig wird die geforderte Eigenschaft erst durch gezielte Nachbehandlung wie Mahlung und/oder Trocknung möglich. Hierzu bieten sich verschiedene Mahltechniken an. Vorteilhaft sind beispielsweise Luftstrahlmühlen, Schneidmühlen, Hammermühlen, Perlmühlen sowie Prallmühlen.

Typischerweise handelt es sich bei den in der vorliegenden Erfindung erwähnten Bindemittelsystemen um hydrophobe Materialien. Hohe Wassergehalte des Ladungssteuermittels können entweder einer Benetzung entgegenstehen oder aber eine Dispergierung begünstigen (Flushen). Daher ist der praktikable Feuchtegehalt stoffspezifisch.

Die erfindungsgemäßen Verbindungen sind durch folgende chemisch/physikalische Eigenschaften gekennzeichnet:
Der Wassergehalt, nach der Karl-Fischer Methode bestimmt, liegt meist zwischen 0,001 % und 30 %, bevorzugt zwischen 0,01 und 25 % und besonders bevorzugt zwischen 0,1 und 15 %, wobei das Wasser adsorbiert und/oder gebunden sein kann, und sich dessen Anteil durch Temperatureinwirkung bis 200°C und Vakuum bis 10⁻⁸ Torr oder durch Wasserzugabe oder Lagerung unter definierten Luftfeuchtebedingungen einstellen lässt.
Überraschenderweise zeigen die erfindungsgemäß verwendeten Verbindungen, die ein oder mehrere vorstehend definierte organische Anionen enthalten, nach 48 h Lagerung bei 90 % rel. Luftfeuchte und 25°C in einem Klimaprüfschrank keinen sonderlich erhöhten H₂O-Gehalt (Karl-Fischer Methode), während die analogen Doppelhydroxide mit anorganischen Anionen deutlich höhere H₂O-Gehalte aufweisen, teilweise ein Vielfaches gegenüber denen vor der Klimalagerung.
Die Teilchengröße, mittels lichtmikroskopischer Auswertung oder Laserlichtbeugung bestimmt, und definiert durch den d₅₀-Wert, liegt zwischen 0,01 µm und 1000 µm, bevorzugt zwischen 0,1 und 500 µm und ganz besonders bevorzugt zwischen 0,5 und 400 µm. Besonders vorteilhaft ist es, wenn durch die Mahlung eine enge Teilchengröße resultiert. Bevorzugt ist ein Bereich Δ (d₉₅-d₅₀) von kleiner als 500 µm, insbesondere kleiner als 400 µm.

Die Leitfähigkeit der 5 %igen wässrigen Dispersion liegt zwischen 0,001 und 2000 mS, vorzugsweise zwischen 0,01 und 100 mS. Die erfindungsgemäßen Verbindungen enthalten überwiegend kristalline, aber auch amorphe Anteile.

Die erfindungsgemäß verwendeten Verbindungen, eingearbeitet in ein Tonerbindemittel, zeigen in einer thermischen Gradientenprüfung (Kofler-Test) eine Temperaturstabilität bis 200°C (keine Verfärbung).

Bei der elektrokinetischen Oberflächenpotentialbestimmung mittels SCD (streaming current detection) zeigen die erfindungsgemäß verwendeten Verbindungen überraschenderweise deutlich niedrigere Oberflächenpotentiale (positives oder negatives Vorzeichen) als die entsprechenden Doppelhydroxide mit anorganischen Anionen. Bei der Titration dieser Verbindungen mit entsprechenden oberflächenaktiven Reagenzien bis zum Nullpunkt des Oberflächenpotentials (SCD-Verfolgung der Titration) ist bei den Verbindungen mit anorganischen Anionen deutlich mehr oberflächenaktives Reagenz nötig als bei den entsprechenden Doppelhydroxiden mit organischen Anionen. Dies weist auf eine hohe Stabilität der Satzbindung zwischen Doppelhydroxid und organischem Anion hin.

Die erfindungsgemäß eingesetzten Salze schichtartiger Doppelhydroxide können auch mit weiteren positiv oder negativ steuernden Ladungssteuermitteln kombiniert werden, um gute anwendungstechnische Aufladbarkeiten zu erzielen, wobei die Gesamt-Konzentration der Ladungssteuermittel zweckmäßig zwischen 0,01 und 50 Gew.-%, bevorzugt zwischen 0,05 und 20 Gew.-%, besonders bevorzugt zwischen 0,1 und 5 Gew.-%, liegt, bezogen auf das Gesamtgewicht des elektrophotographischen Toners, Entwicklers, Pulvers oder Pulverlacks.

Als weitere Ladungssteuermittel kommen beispielsweise in Betracht:
Triphenylmethane; Ammonium- und Immoniumverbindungen, Iminiumverbindungen; fluorierte Ammonium- und fluorierte Immoniumverbindungen; biskationische Säureamide; polymere Ammoniumverbindungen; Diallylammoniumverbindungen; Arylsulfid-Derivate, Phenolderivate; Phosphoniumverbindungen und fluorierte Phosphoniumverbindungen; Calix(n)arene, ringförmig verknüpfte Oligosaccharide (Cyclodextrine) und deren Derivate, insbesondere Borester-Derivate, Interpolyelektrolytkomplexe (IPECs); Polyestersalze; Metallkomplexverbindungen, insbesondere Salicylat-Metall-Komplexe und Salicylat-Nichtmetalkomplexe, Salze ionischer Struktursilikate, Hydroxycarbonsäure-Metall-Komplexe und Hydroxycarbonsäure-Nichtmetallkomplexe, Benzimidazolone; Azine, Thiazine oder Oxazine, die im Colour Index als Pigments, Solvent Dyes, Basic Dyes oder Acid Dyes aufgeführt sind.

Besonders bevorzugt sind die nachfolgend genannten Ladungssteuermittel, die einzeln oder in Kombination miteinander mit den erfindungsgemäß verwendeten Doppelhydroxiden kombiniert werden können:
Triphenylmethane, wie z.B. beschrieben in US-A-5 051 585;
Ammonium- und Immoniumverbindungen, wie z.B. beschrieben in US-A-5 015 676;
Fluorierte Ammonium- und fluorierte Immoniumverbindungen, wie z.B. beschrieben in US-A-5 069 994; biskationische Säureamide, wie z.B. beschrieben in WO 91/10172; Diallylammoniumverbindungen, wie z.B. beschrieben in DE-A-4 142 541, DE-A-4 029 652 oder DE-A-4 103 610;
Arylsulfid-Derivate, wie z.B. beschrieben in DE-A-4 031 705;
Phenolderivate, wie z.B. beschrieben in EP-A-0 258 651;
Phosphoniumverbindungen und fluorierte Phosphoniumverbindungen, wie z.B. beschrieben in US-A-5 021 473 und US-A-5 147 748;
Calix(n)arene, wie z.B. beschrieben in EP-A-0 385 580;
Benzimidazolone, wie z.B. beschrieben in EP-A-0 347 695;
Ringförmig verknüpfte Oligosaccharide, wie z.B. beschrieben in DE-A-4 418 842; Polyestersalze, wie z.B. beschrieben in DE-A-4 332 170;
Cyclooligosaccharid-Verbindungen, wie z.B. beschrieben in DE-A-197 11 260; Inter-Polyelektrolyt-Komplexe, wie z.B. beschrieben in DE-A-197 32 995,
Salze ionischer Struktursilikate, wie z.B. beschrieben in PCT/EP 00/11217.
Weiterhin geeignet, insbesondere für Flüssigtoner, sind oberflächenaktive, ionische Verbindungen und sogenannte Metallseifen.
Besonders geeignet sind alkylierte Arylsulfonate, wie Bariumpetronate, Calciumpetronate, Bariumdinonylnaphthalensulfonate (basisch und neutral), Calciumdinonylsulfonat oder Dodecylbenzolsulfonsäure-Na-salz und Polyisobutylensuccinimide (Chevrons Oloa 1200).
Weiterhin geeignet sind Soyalecithin und N-Vinylpyrrolidon-Polymere.
Weiterhin geeignet sind Natriumsalze von phosphatierten Mono- und Diglyceriden mit gesättigten und ungesättigten Substituenten, AB- Diblockcopolymere von A:
Polymere von 2-(N;N)di-methylaminoethyl-methacrylat quarternisiert mit Methyl-p-toluolsulfonat, und B: Poly-2-ethylhexylmethacrylat.
Weiterhin geeignet, insbesondere in Flüssigtonern, sind di- und trivalente Carboxylate, insbesondere Aluminium-tristearat, Bariumstearat, Chromstearat, Magnesiumoktat, Calciumstearat, Eisennaphthalit und Zinknaphthalit.
Weiterhin sind geeignet chelatisierende Ladungssteuermittel (EP 0 636 945 A1), metallische (ionische) Verbindungen (EP 0 778 501 A1), Phosphat-Metallsalze, wie in JA 9 (1997)-106107 beschrieben. Weiterhin geeignet sind Azine der folgenden Color-Index-Nummern: C.I. Solvent Black 5, 5:1, 5:2, 7, 31 und 50; C.I. Pigment Black 1, C.I. Basic Red 2 und C.I. Basic Black 1 und 2.

Die erfindungsgemäß verwendeten schichtartigen Doppelhydroxide werden einzeln oder in Kombination miteinander oder mit weiteren, vorstehend genannten Ladungssteuermitteln, in einer Konzentration von 0,01 bis 50 Gew.-%, vorzugsweise von 0,05 bis 20 Gew.-%, besonders bevorzugt von 0,1 bis 5,0 Gew.-%, bezogen auf die Gesamtmischung, in das Bindemittel des jeweiligen Toners, Entwicklers, Lacks, Pulverlacks, Elektretmaterials oder des elektrostatisch zu trennenden Polymers homogen, beispielsweise durch Extrudieren oder Einkneten, Perlmahlen oder mit Ultraturrax (Schnellrührer) eingearbeitet. Dabei können die erfindungsgemäß eingesetzten Verbindungen als getrocknete und gemahlene Pulver, Dispersionen oder Lösungen, Presskuchen, Masterbatches, Präparationen, angeteigte Pasten, als auf geeignete Träger, wie z.B. Kieselgel bzw. mit solchen Trägern vermischt, TiO₂, Al₂O₃, Ruß, aus wässriger oder nicht-wässriger Lösung aufgezogene Verbindungen oder in sonstiger Form zugegeben werden. Ebenso können die erfindungsgemäß verwendeten Verbindungen grundsätzlich auch schon bei der Herstellung der jeweiligen Bindemittel zugegeben werden, d.h. im Verlauf von deren Polymerisation, Polyaddition oder Polykondensation, sowie bei der Herstellung von Polymerisationstonern, beispielsweise während der Suspensions-, Emulsions-polymerisation oder bei der Aggregation der Polymersysteme zu Tonerteilchen.

Die erfindungsgemäßen Ladungssteuermittel können auch in Form feinverteilter wässriger, wässrig-organischer oder organischer Dispersionen eingesetzt werden. Die Teilchengrößen (d₅₀-Werte) liegen zwischen 20 nm und 1 µm, bevorzugt zwischen 50 und 500 nm. Zweckmäßig sind Konzentrationen an Ladungssteuermittel zwischen 0,01 und 50 Gew.-%, vorzugsweise zwischen 0,1 und 30 Gew.-%, bezogen auf das Gesamtgewicht der Dispersion. Die Viskosität einer solchen Dispersion liegt zweckmäßigerweise zwischen 0,5 und 10⁶ mPa s, vorzugsweise zwischen 1 und 5000 mPa s.
Im Falle wässriger oder wässrig-organischer Dispersionen wird Wasser vorzugsweise in Form von destilliertem oder entsalztem Wasser eingesetzt.
Im Fall organischer oder wässrig-organischer Dispersionen werden als organisches Medium ein oder mehrere organische Lösemittel eingesetzt, vorzugsweise aus der Gruppe der ein- oder mehrwertigen Alkohole, deren Ether und Ester, z. B. Alkanole, insbesondere mit 1 bis 4 C-Atomen, wie z.B. Methanol, Ethanol, Propanol, Isopropanol, Butanol, Isobutanol; zwei- oder dreiwertige Alkohole, insbesondere mit 2 bis 6 C-Atomen, z. B. Ethylenglykol, Propylenglykol, 1,3-Propandiol, 1,4-Butandiol, 1,5-Pentandiol, 1,6-Hexandiol, 1,2,6-Hexantriol, Glyzerin, Diethylenglykol, Dipropylenglykol, Triethylenglykol, Polyethylenglykol, Tripropylenglykol, Polypropylenglykol; niedere Alkylether von mehrwertigen Alkoholen, wie z.B. Ethylenglykolmonomethyl- oder ethyl- oder butylether, Triethylenglykolmonomethyl- oder ethylether; Ketone und Ketonalkohole, wie z.B. Aceton, Methylethylketon, Di-ethylketon, Methylisobutylketon, Methylpentylketon, Cyclopentanon, Cyclohexanon, Diacetonalkohol; Amide, wie z.B. Dimethylformamid, Dimethylacetamid und N-Methylpyrrolidon.
Zur Herstellung stabiler Dispersionen können zusätzlich noch übliche ionische oder nichtionische Dispergierhilfsmittel, wie z.B. Sulfonate, Phosphate, Polyphosphate, Carbonate, Silicate, Hydroxide, Metallseifen, Polymere, wie Acrylate, Fettsäurederivate und Glycosidverbindungen, eingesetzt werden. Weiterhin können die Dispersionen Metallkomplexbildner, wie z.B. EDTA oder NTA, enthalten.
Weiterhin können die Dispersionen noch weitere übliche Zusatzstoffe enthalten, wie beispielsweise Konservierungsmittel, Biocide, Antioxidantien, kationische, anionische, amphotere oder nichtionogene oberflächenaktive Substanzen (Tenside und Netzmittel), Entgaser/Entschäumer sowie Mittel zur Regulierung der Viskosität, z.B. Polyvinylalkohol, Cellulosederivate oder wasserlösliche natürliche oder künstliche Harze und Polymere als Filmbildner bzw. Bindemittel zur Erhöhung der Haft- und Abriebfestigkeit. Als pH-Regulatoren kommen organische oder anorganische Basen und Säuren zum Einsatz. Bevorzugte organische Basen sind Amine, wie z.B. Ethanolamin, Diethanolamin, Triethanolamin, N,N-Dimethylethanolamin, Diisopropylamin, Aminomethylpropanol oder Dimethylminomethylpropanol. Bevorzugte anorganische Basen sind Natrium-, Kalium-, Lithiumhydroxid oder Ammoniak. Weitere Bestandteile können hydrotrope Verbindungen sein, wie z.B. Formamid, Harnstoff, Tetramethylharnstoff,
ε-Caprolactam, Ethylenglykol, Diethylenglykol, Triethylenglykol, Polyethylenglykol, Butylglykol, Methylcellosolve, Glycerin, Zucker, N-Methylpyrrolidon, 1,3-Diethyl-2-imidazolidinon, Thiodiglykol, Natrium-Benzolsulfonat, Na-Xylolsulfonat, Na-Toluolsulfonat, Na-Cumolsulfonat, Na-Benzoat, Na-Salicylat oder Na-Butylmonoglykolsulfat.
Die Konzentration dieser Dispergierhilfsmittel und/oder üblicher Zusatzstoffe in der Dispersion liegt zweckmäßigerweise zwischen 0,001 und 80 Gew.-%, vorzugsweise zwischen 0,01 und 50 Gew.-%, bezogen auf das Gesamtgewicht der Dispersion.

Um elektrophotographische Bunttoner herzustellen, werden Farbmittel wie organische Buntpigmente, anorganische Pigmente oder Farbstoffe, üblicherweise in Form von Pulvern, Dispersionen, Presskuchen, Lösungen oder Masterbatches, zugesetzt.
Die organischen Buntpigmente können aus der Gruppe der Azopigmente oder polycyclischen Pigmente oder Mischkristalle (solid solutions) solcher Pigmente sein.
Bevorzugte Blau- und/oder Grünpigmente sind Kupferphthalocyanine, wie C.I. Pigment Blue 15, 15:1, 15:2, 15:3, 15:4, 15:6, P. Blue 16 (metallfreies Phthalocyanin), oder Phthalocyanine mit Aluminium, Nickel, Eisen oder Vanadium als Zentralatom, weiterhin Triarylcarboniumpigmente, wie Pigment Blue 1, 2, 9, 10, 14, 62, 68, Pigment Green 1, 4, 7, 45; Orange-Pigmente, wie z.B. P.O. 5, 62, 36, 34, 13, 43, 71; Gelbpigmente, wie z.B. P.Y. 12, 13, 14,17, 74, 83, 93, 97, 111, 120,122, 139,151, 154, 155, 174, 175, 176,180, 174, 185, 194, 213, 214. Rot-Pigmente, wie z.B. P.R. 2,3, 4,5,9, 38, 48, 53, 57, 112, 122, 144, 146, 147,149, 168, 170, 175,176, 177,179,181, 184, 185, 186, 188, 189, 202, 207, 208, 209, 210, 214, 219, 238, 253, 254, 255, 256,257, 266, 269, 270, 272, 279. Violett-Pigmente wie P.V. 1, 19, 23,32, Ruße wie P. Black 7, 11, 33 oder in ihrer oberflächenmodifizierten Form wie in US 5,554,739 beschrieben, Eisen/ManganOxide; weiterhin Mischkristalle wie beispielsweise aus oben beschriebenen Pigmenten wie C.I. Pigment Violett 19 und C.I. Pigment Red 122, sowie azo-oberflächenmodifizierte Pigmente wie in WO 01/30919 beschrieben.

Die Mischungen können in Form der Pulver, durch Mischen von Presskuchen, sprühgetrockneten Presskuchen, Masterbatches sowie durch Dispergieren (Extrusion, Kneten, Walzenstuhlverfahren, Perlmühlen, Ultraturrax, Ultraschall) in Gegenwart eines Trägermaterials in fester oder flüssiger Form (Tinten auf wässriger und nicht-wässriger Basis) sowie durch Flushen in Gegenwart eines Trägermaterials hergestellt werden. Wird das Farbmittel mit hohen Wasser- oder Lösemittelanteilen eingesetzt (> 5 %), so kann das Mischen auch in Gegenwart erhöhter Temperaturen durch nachträgliches Abkühlen der Mischungs-Masse und durch Vakuum unterstützt ablaufen. Der Flushvorgang kann in Gegenwart oder Abwesenheit von organischen Lösemitteln und von Wachsen ablaufen.

Insbesondere zur Steigerung der Brillanz, aber auch zur Nuancierung des Farbtones bieten sich Mischungen mit organischen Farbstoffen an. Als solche sind bevorzugt zu nennen:
wasserlösliche Farbstoffe, wie z.B. Direct, Reactive und Acid Dyes, sowie lösemittellösliche Farbstoffe, wie z.B. Solvent Dyes, Disperse Dyes und Vat Dyes. Als Beispiele seien genannt: C.I. Reactive Yellow 37, Acid Yellow 23, Reactive Red 23, 180, Acid Red 52, Reactive Blue 19, 21, Acid Blue 9, Direct Blue 199, Solvent Yellow 14, 16, 25, 56, 62, 64, 79, 81, 82, 83, 83:1, 93, 98, 133, 162, 174, Solvent Red 8, 19, 24, 49, 89, 90, 91, 92, 109, 118, 119, 122, 124, 127, 135, 160, 195, 212, 215, Solvent Blue 44, 45, Solvent Orange 41, 60, 63, Disperse Yellow 64, Vat Red 41, Solvent Black 45, 27.

Auch können Farbstoffe und Pigmente mit fluoreszierenden Eigenschaften, wie ^{®}Luminole (Riedel-de Haen) eingesetzt werden, beispielsweise um fälschungssichere Toner herzustellen.
Weiterhin können die Farbmittel auch in einer speziellen wachsgecoateten Form, wie in der EP-A-1 204 005 beschrieben, in Kombination mit den erfindungsgemäßen Ladunngssteuermitteln verwendet werden.

Anorganische Pigmente, wie beispielsweise TiO₂ oder BaSO₄, dienen in Mischungen zur Aufhellung. Weiterhin sind Mischungen mit Effekt-Pigmenten, wie beispielsweise Perlglanz-Pigmenten, Fe₂O₃-Pigmenten (^{®}Paliochrome) sowie Pigmenten auf Basis cholesterischer Polymere, die in Abhängigkeit vom Beobachtungswinkel unterschiedliche Farbeindrücke ergeben, geeignet.

Elektrophotographische Toner und auch Pulverlacke können weiterhin noch Wachse enthalten. Der Begriff "Wachs" bezeichnet eine Reihe natürlicher oder künstlich gewonnener Stoffe, die in der Regel folgende Eigenschaften aufweisen: Bei 20°C knetbar, fest bis brüchig hart, grob bis feinkristallin, durchscheinend bis opak, jedoch nicht glasartig; über 40°C ohne Zersetzung schmelzend, schon wenig oberhalb des Schmelzpunktes verhältnismäßig niedrigviskos und nicht fadenziehend, stark temperaturabhängige Konsistenz und Löslichkeit, unter leichtem Druck polierbar (vgl. Ullmanns Enzyklopädie der technischen Chemie, Band 24, 4. Auflage 1983, S. 1-49, Verlag Chemie, Weinheim und Römpps Chemie-Lexikon, Band 6, 8. Auflage1988, S. 463, Franck'sche Verlagshandlung).

Als Wachse werden bevorzugt: Naturwachse, wie Pflanzenwachse, z.B. Carnaubawachs, Candellilawachs, und tierische Wachse, z.B. Bienenwachs, modifizierte Naturwachse, wie z.B. Paraffinwachse, Mikrowachse, teilsynthetische Wachse, wie z.B. Montanesterwachse, oder vollsynthetische Wachse, wie Polyolefinwachse, z.B. Polyethylen und Polypropylenwachse, Polyethylenglykolwachse, Cycloolefincopolymerwachse, Amidwachse, wie z.B. N,N'-Distearylethylendiamin, Zirconocenwachse sowie chlor- oder fluorhaltige Polyolefinwachse oder Polyethylen-Polytetrafluorethylen-Wachsmischungen.

Besonders bevorzugt sind Polyolefinwachse, sowie polare Gruppen enthaltende Polyolefinwachse, entstanden durch nachträgliche Oxidation des Polyolefinwachses, durch Pfropfreaktion mit Carbonsäure-, Carbonsäureester-, Carbonsäureanhydrid- oder Hydroxygruppen enthaltenden Monomeren oder durch Copolymerisation aus einem Olefin und einem Carbonsäure-, Carbonsäureester-, Carbonsäureamid-, Carbonsäureanhydrid- oder Hydroxygruppen enthaltenden Monomer.

Wachse im Sinne der vorliegenden Erfindung können auch höhermolekulare Verbindungen sein, die einen wachsartigen Charakter aufweisen und vorzugsweise durch Polykondensations-, Polyadditions- oder Polymerisationsverfahren hergestellt wurden, z.B. thermoplastische Polyester-, Epoxid-, Styrol-Acrylat-Copolymer-, Styrol-Butadien-Copolymer-, Cycloolefincopolymer-Harze, wie z.B. ^{®}Topas. Um eine ausreichende Löslichkeit bei erhöhter Temperatur in organischen Lösungsmitteln zu besitzen, besitzen solche Polymere meist ein Zahlenmittel des Molekulargewichts (M̅ₙ) von 500 bis zu 20000. Bevorzugt sind Wachse mit einem Zahlenmittel des Molekulargewichts (M̅ₙ) von 800 bis zu 10000, besonders bevorzugt mit einem Zahlenmittel des Molekulargewichts (M̅*ₙ*) von 1000 bis zu 5000.

Der Tropfpunkt der erfindungsgemäß eingesetzten Wachse oder die Erweichungstemperatur der genannten wachsartigen Polymere liegt vorzugsweise im Bereich von 20 bis 180°C, besonders bevorzugt im Bereich von 30 bis 140°C.

Gegenstand der vorliegenden Erfindung ist auch ein elektrophotographischer Toner, Pulver oder Pulverlack, enthaltend 30 bis 99,99 Gew.-%, vorzugsweise 40 bis 99,5 Gew.-%, eines üblichen Bindemittels, beispielsweise ein Styrol-, Styrolacrylat, Styrolbutadien-, Acrylat-, Urethan-, Acryl-, Polyester- oder Epoxidharz oder eine Kombination der letzten beiden, 0,01 bis 50 Gew.-%, vorzugsweise 0,05 bis 20 Gew.-%, besonders bevorzugt 0,1 bis 5 Gew.-%, mindestens eines Salzes schichtartiger Doppelhydroxide, wie vorstehend beschrieben, und gegebenenfalls 0,001 bis 50 Gew.-%, vorzugsweise 0,05 bis 20 Gew.-%, eines Farbmittels, jeweils bezogen auf das Gesamtgewicht des elektrophotographischen Toners, Pulvers oder Pulverlacks.

Ferner können die erfindungsgemäß beschriebenen Verbindungen auf "Free-Flow Agents" als zusätzliches Ladungssteuerelement in suspendierter Form oder in trockener Abmischung aufgebracht werden. Die erfindungsgemäß beschriebenen Verbindungen können auch für ein "Carrier-Coating" eingesetzt werden.
In den nachfolgenden Beispielen bedeuten Teile Gewichtsteile und Prozent Gewichtsprozent.

### Herstellungsbeispiel 1

10 g Mg-Al-Hydroxid-carbonat (stöchiometrisches Mg:Al-Verhältnis=2:1) (Syntal HSA 696, Fa. Südchemie, Deutschland) werden in 100 ml deionisiertem Wasser 1 Stunde bei 60 - 80°C mittels Rühren dispergiert. Dann wird eine Lösung aus 3 g Benzoesäure in 100 ml deionisiertem Wasser unter Zugabe von Natriumhydroxid bis zu einem pH von ca. 8 hergestellt und zur Mg-AI-Hydroxid-carbonat-Suspension zugegeben. Die Mischung wird bei 70°C 6 Stunden gerührt, die Suspension abfiltriert, mehrmals mit deionisiertem Wasser nachgewaschen und anschließend bei 60 - 80°C im Vakuum getrocknet.

### Herstellungsbeispiel 2

10 g calciniertes Mg-Al-Hydroxid-carbonat (stöchiometrisches Mg:Al-Verhältnis = 2:1) (Syntal HSAC 701, Fa. Südchemie) werden in 100 ml deionisiertem Wasser 1 Stunde bei 60°C mittels Rühren dispergiert. Dann wird eine Lösung aus 3 g 4-Toluolsulfonsäure in 100 ml deionisiertem Wasser zur Mg-AI-Hydroxid-carbonat-Suspension zugegeben und die Mischung bei 80°C 30 Stunden gerührt. Danach wird die Suspension abfiltriert, mehrmals mit deionisiertem Wasser nachgewaschen und anschließend bei 70°C im Vakuum getrocknet.

### Herstellungsbeispiele 1 bis 14

| Bsp. Nr. | Doppelhydroxid | Anion A |
|---|---|---|
| 1 | Syntal HSA 696 | Benzoesäure |
| 2 | Syntal HSAC 701 | 4-Toluolsulfonsäure |
| 3 | Syntal HSA 696 | Dithiodisalicylsäure |
| 4 | Sorbacid 911, Fa. Südchemie (Mg:Al = 2:1) | längerkettige Carbonsäure |
| 5 | Syntal HSAC 701 (calcin.) | Citronensäure |
| 6 | Syntal HSAC 701 (calcin.) | Milchsäure |
| 7 | Syntal HSAC 701 (calcin.) | Glycolsäure |
| 8 | Syntal HSAC 701 (calcin.) | Weinsäure |
| 9 | Syntal HSAC 701 (calcin.) | Dodecylbenzolsulfonsäure |
| 10 | Syntal HSAC 701 (calcin.) | C₁₂/C₁₄-Alkyl-triglykolethersulfat-Na |
| 11 | Syntal HSAC 701 (calcin.) | Naphthalin-2-sulfonsäure |
| 12 | Syntal HSAC 701 (calcin.) | 1-Naphthoesäure |
| 13 | Syntal HSAC 701 (calcin.) | Decansäure |
| 14 | Syntal HSAC 701 (calcin.) | Hexansäure |

Die Beispiele 4-10 und 13-14 sind Vergleichsbeispiele.

### Anwendungsbeispiel 1

1 Teil der Verbindung aus Herstellungsbeispiel 1 wird mittels eines Kneters innerhalb von 30 Min. in 99 Teile eines Tonerbindemittels (Styrol-Acrylat-Copolymer 60:40 ^{®}Almacryl B-1501) homogen eingearbeitet. Anschließend wird auf einer Labor-Universalmühle gemahlen und dann auf einem Zentrifugalsichter klassifiziert. Die gewünschte Teilchenfraktion (4 bis 25 µm) wird mit einem Carrier aktiviert, der aus mit Styrol-Methacrylat-Copolymer (90:10) beschichteten Magnetit-Teilchen der Größe 50 bis 200 µm besteht.

### Anwendungsbeispiel 2

Es wird wie in Anwendungsbeispiel 1 verfahren, wobei, anstelle des Styrol-Acrylat-Copolymers ein Polyesterharz auf Bisphenol-A-Basis (^{®}Fine Tone 382-ES ) und als Carrier mit Silikon beschichtete Ferrit-Teilchen der Größe 50 - 200 µm verwendet werden.

Die Messung erfolgt an einem üblichen q/m-Messstand. Durch Verwendung eines Siebes mit einer Maschenweite von 45 µm wird sichergestellt, dass bei den Tonerausblasungen kein Carrier mitgerissen wird. Die Messungen erfolgen bei ca. 50 %iger relativer Luftfeuchte. In Abhängigkeit von der Aktivierdauer werden folgende q/m-Werte [µC/g] gemessen:

| Aktivierdauer | Anwendungsbeispiel | |
|---|---|---|
| | 1 | 2 |
| | Aufladung q/m [µC/g] | |
| 5 Min. | -10 | -23 |
| 10 Min. | -10 | -23 |
| 30 Min. | -11 | -24 |
| 2 Std. | -12 | -27 |

### Anwendungsbeispiele 3 bis 15:

Es wird wie in Anwendungsbeispiel 2 verfahren, wobei anstelle der Verbindung aus Herstellungsbeispiel 1 die unten aufgeführten Verbindungen eingesetzt werden. Die Anwendungsbeispiele 5-11 und 14-15 sind Vergleichsbeipiele.

| Bsp. Nr. | eingesetzte Verbindung | q/m [µC/g] | | | |
|---|---|---|---|---|---|
| | | 5 Min. | 10 Min. | 30 Min. | 2 Std. |
| 3 | Herstellungsbeispiel 2 | - 21 | - 23 | - 25 | - 26 |
| 4 | Herstellungsbeispiel 3 | - 22 | - 23 | - 25 | - 25 |
| 5 | Herstellungsbeispiel 4 | - 19 | - 22 | - 27 | - 30 |
| 6 | Herstellungsbeispiel 5 | - 16 | - 17 | - 17 | - 18 |
| 7 | Herstellungsbeispiel 6 | - 19 | - 19 | - 20 | - 17 |
| 8 | Herstellungsbeispiel 7 | - 18 | - 19 | - 20 | - 19 |
| 9 | Herstellungsbeispiel 8 | - 16 | - 18 | - 19 | - 16 |
| 10 | Herstellungsbeispiel 9 | - 6 | - 4 | - 4 | - 4 |
| 11 | Herstellungsbeispiel 10 | - 8 | - 6 | - 4 | - 3 |
| 12 | Herstellungsbeispiel 11 | - 20 | - 23 | - 26 | - 25 |
| 13 | Herstellungsbeispiel 12 | - 19 | - 24 | - 28 | - 30 |
| 14 | Herstellungsbeispiel 13 | - 20 | - 22 | - 24 | - 25 |
| 15 | Herstellungsbeispiel 14 | - 22 | - 25 | - 28 | - 29 |

## Patentansprüche

1. Verwendung von schichtartigen Doppelhydroxid-Salzen als Ladungssteuermittel in elektrophotographischen Tonern und Entwicklern, in Pulverlacken, Elektretmaterialien und in elektrostatischen Trennvorgängen von aufladbaren Materialien, **dadurch gekennzeichnet, dass** das Doppelhydroxid-Salz einwertige Metallkationen oder eine Mischung davon oder zweiwertige, sowie dreiwertige Metallkationen, sowie organische Anionen A der nachstehenden Formeln enthält 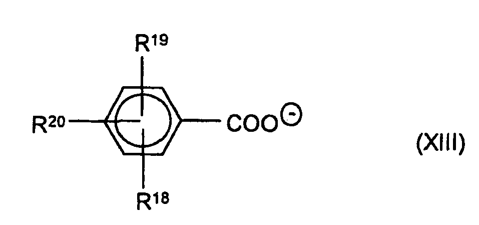 worin R¹⁸, R¹⁹ und R²⁰ gleich oder verschieden sind und Wasserstoff, C₁-C₂₂-Alkyl, C₁-C₁₈-Alkenyl, C₁-C₁₈-Alkoxy, bedeuten; 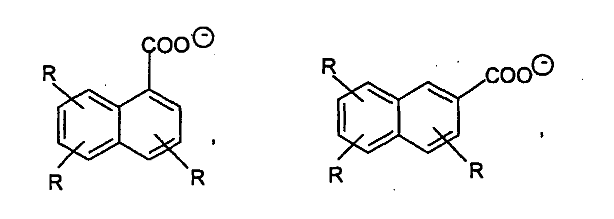 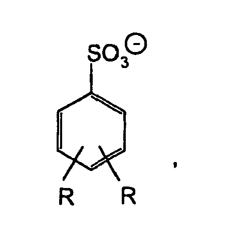 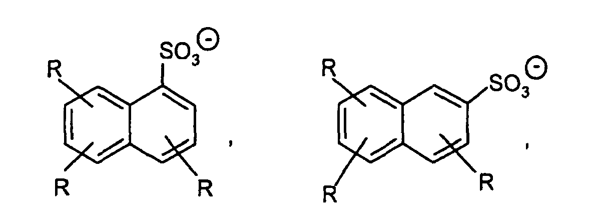 worin R Wasserstoff, C₁-C₄-Alkyl, C₁-C₄-Alkoxy oder Halogen bedeutet, sowie der Formel (XXII) 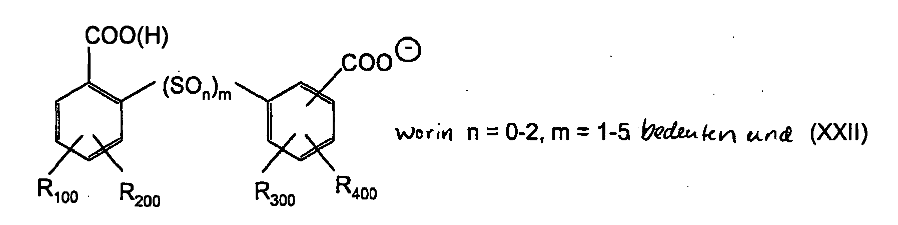 worin die Reste R₁₀₀ bis R₄₀₀ gleich oder verschieden sind und Wasserstoff, C₁-C₂₂-Alkyl, C₁-C₁₈-Alkenyl, C₁-C₁₈-Alkoxy, Hydroxy-(C₁-C₁₈)alkylen, Amino-(C₁-C₁₈)-alkylen, C₁-C₁₈-Alkylimino, Carboxy, Carboxy(C₁-C₁₈)-alkylen-, Hydroxy, Amino, Nitro, Cyano, Sulfo, Halogen, C₁-C₁₈-Acyl, C₁-C₁₈-Halogenalkyl, C₁-C₁₈-Alkylcarbonyl, C₁-C₁₈-Alkylcarbonyloxy, C₁-C₁₈-Alkoxycarbonyl, C₁-C₁₈-Alkylaminocarbonyl, C₁-C₁₈-Alkylcarbonylimino, C₆-C₁₀-Arylcarbonyl, Aminocarbonyl, Aminosulfonyl, C₁-C₁₈-Alkylaminosulfonyl, Phenyl, Naphthyl, Heteroaryl bedeuten.

2. Verwendung nach Anspruch 1, **dadurch gekennzeichnet, dass** als organisches Anion ein Anion folgender Säuren eingesetzt wird: Benzoesäure, Naphthoesäure, 4-tert.-Butylbenzoesäure, Benzolsulfonsäure, p-Toluolsulfonsäure, Naphthalinsulfonsäure, 2,2'-Dithiobenzoesäure.

3. Verwendung nach Anspruch 1 oder 2, **dadurch gekennzeichnet, dass** die Anzahl der Hydroxygruppen etwa das 1,8 bis 2,2-fache der Summe aller Metallkationen beträgt.

4. Verwendung nach mindestens einem der Ansprüche 1 bis 3, **dadurch gekennzeichnet, dass** als einwertige Metallkationen solche aus der Gruppe Li⁺, Na⁺ und K⁺, als zweiwertige Metallkationen solche aus der Gruppe Mg²⁺, Ca²⁺, Zn²⁺, Co²⁺, Ni²⁺, Fe²⁺, Cu²⁺ und Mn²⁺, als dreiwertige Metallkationen solche aus der Gruppe Al³⁺, Fe³⁺, Co³⁺, Mn³⁺, Ni³⁺, Cr³⁺ und B³⁺ enthalten sind.

5. Verwendung nach mindestens einem der Ansprüche 1 bis 4, **dadurch gekennzeichnet, dass** die Doppelhydroxid-Salze Mg²⁺ und Al³⁺ enthalten.

6. Verwendung nach Anspruch 5, **dadurch gekennzeichnet, dass** das molare Verhältnis Mg²⁺: Al³⁺ 3,1:1 bis 1:2 beträgt.

7. Verwendung nach mindestens einem der Ansprüche 1 bis 6, **dadurch gekennzeichnet, dass** das Doppelhydroxid-Salz ein calciniertes Hydrotalcit ist.

8. Verwendung nach mindestens einem der Ansprüche 1 bis 7, **dadurch gekennzeichnet, dass** das Doppelhydroxid-Salz in Kombination mit einem oder mehreren weiteren Ladungssteuermitteln aus der Gruppe der Triphenylmethane; Ammonium- und Immoniumverbindungen, Iminiumverbindungen; fluorierte Ammonium- und fluorierte Immoniumverbindungen; biskationische Säureamide; polymere Ammoniumverbindungen; Diallylammoniumverbindungen; Arylsulfid-Derivate, Phenolderivate; Phosphoniumverbindungen und fluorierte Phosphoniumverbindungen; Calix(n)arene, ringförmig verknüpfte Oligosaccharide (Cyclodextrine) und deren Derivate, insbesondere Borester-Derivate, Interpolyelektrolytkomplexe (IPECs); Polyestersalze; Metallkomplexverbindungen, insbesondere Salicylat-Metall-Komplexe und Salicylat-Nichtmetalkomplexe, Salze ionischer Struktursilikate, Hydroxycarbonsäure-Metall-Komplexe und Hydroxycarbonsäure-Nichtmetallkomplexe, Benzimidazolone; Azine, Thiazine oder Oxazine, die im Colour Index als Pigments, Solvent Dyes, Basic Dyes oder Acid Dyes aufgeführt sind, eingesetzt wird.

9. Verwendung nach mindestens einem der Ansprüche 1 bis 8 in einer Konzentration von 0,01 bis 50 Gew.-%, bezogen auf das Gesamtgewicht des Toners, Entwicklers, Lacks, Pulverlacks, Elektretmaterials oder der elektrostatisch zu trennenden Materialien.

10. Elektrophotographischer Toner, Pulver oder Pulverlack, enthaltend 30 bis 99,99 Gew.-%, eines Bindemittels, 0,01 bis 50 Gew.-% mindestens eines schichtartigen Doppelhydroxid-Salzes gemäß Ansprüchen 1 bis 7, und gegebenenfalls 0,001 bis 50 Gew.-% eines Farbmittels, jeweils bezogen auf das Gesamtgewicht des elektrophotographischen Toners, Pulvers oder Pulverlacks.

## Claims

1. The use of layered double hydroxide salts as charge control agents in electrophotographic toners and developers, in powder coating materials, electret materials and in electrostatic separation processes of chargeable materials, wherein the double hydroxide salt contains monovalent or divalent metal cations or a mixture thereof, and also trivalent metal cations, and also contains organic anions A of the formulae below 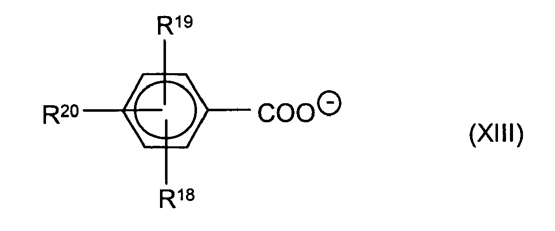 in which R¹⁸, R¹⁹ and R²⁰ are identical or different and are hydrogen, C₁-C₂₂-alkyl, C₁-C₁₈-alkenyl, C₁-C₁₈-alkoxy; 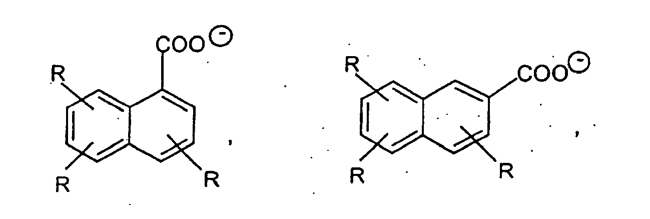 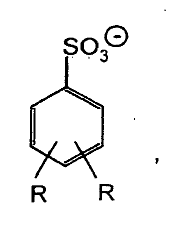 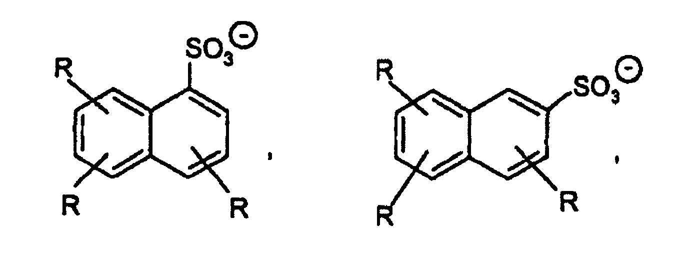 in which R is hydrogen, C₁-C₄-alkyl, C₁-C₄-alkoxy or halogen, and of the formula (XXII) 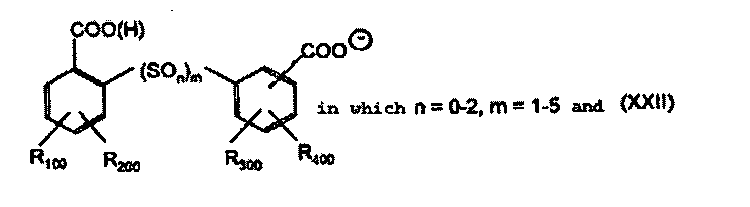 in which the radicals R₁₀₀ to R₄₀₀ are identical or different and are hydrogen, C₁₋C₂₂-alkyl, C₁-C₁₈-alkenyl, C₁-C₁₈-alkoxy, hydroxy-(C₁-C₁₈)alkylene, amino-(C₁-C₁₈)-alkylene, C₁-C₁₈-alkylimino, carboxy, carboxy(C₁-C₁₈)-alkylene-, hydroxy, amino, nitro, cyano, sulfo, halogen, C₁-C₁₈-acyl, C₁-C₁₈-haloalkyl, C₁-C₁₈-alkylcarbonyl, C₁-C₁₈-alkylcarbonyloxy, C₁-C₁₈-alkoxycarbonyl, C₁-C₁₈-alkylaminocarbonyl, C₁-C₁₈-alkylcarbonylimino, C₆-C₁₀-arylcarbonyl, aminocarbonyl, aminosulfonyl, C₁-C₁₈-alkylaminosulfonyl, phenyl, naphthyl, heteroaryl.

2. The use as claimed in claim 1, wherein as organic anion an anion of the following acids is used:
benzoic acid, naphthoic acid, 4-tert-butylbenzoic acid, benzenesulfonic acid, p-toluenesulfonic acid, naphthalenesulfonic acid, 2,2'-dithiobenzoic acid.

3. The use as claimed in claim 1 or 2, wherein the number of hydroxyl groups is from about 1.8 to 2.2 times the sum of all the metal cations.

4. The use as claimed in at least one of claims 1 to 3, wherein monovalent metal cations present are those from the group Li⁺, Na⁺ and K⁺, divalent metal cations present are those from the group Mg²⁺, Ca²⁺, Zn²⁺, Co²⁺, Ni²⁺, Fe²⁺, Cu²⁺ and Mn²⁺, and trivalent metal cations present are those from the group Al³⁺, Fe³⁺, Co³⁺, Mn³⁺, Ni³⁺, Cr³⁺ and B³⁺.

5. The use as claimed in at least one of claims 1 to 4, wherein the double hydroxide salts contain Mg²⁺ and Al³⁺.

6. The use as claimed in claim 5, wherein the molar ratio Mg²⁺: Al³⁺ is from 3.1:1 to 1:2.

7. The use as claimed in at least one of claims 1 to 6, wherein the double hydroxide salt is a calcined hydrotalcite.

8. The use as claimed in at least one of claims 1 to 7, wherein the double hydroxide salt is used in combination with one or more further charge control agents from the group of triphenylmethanes; ammonium and immonium compounds, iminium compounds; fluorinated ammonium and fluorinated immonium compounds; biscationic acid amides; polymeric ammonium compounds; diallylammonium compounds; aryl sulfide derivatives, phenol derivatives; phosphonium compounds and fluorinated phosphonium compounds; calix[n]arenes, cyclically linked oligosaccharides (cyclodextrins) and their derivatives, in particular boron ester derivatives, interpolyelectrolyte complexes (IPECs); polyester salts; metal complex compounds, especially salicylate-metal complexes and salicylate-nonmetal complexes, salts of ionic structured silicates, hydroxycarboxylic acid-metal complexes and hydroxycarboxylic acid-nonmetal complexes, benzimidazolones; azines, thiazines or oxazines which are listed in the Colour Index as Pigments, Solvent Dyes, Basic Dyes or Acid Dyes.

9. The use as claimed in at least one of claims 1 to 8 in a concentration of from 0.01 % to 50% by weight, based on the total weight of the toner, developer, coating material, powder coating material, electret material or materials for electrostatic separation.

10. An electrophotographic toner, powder or powder coating material, containing from 30% to 99.99% by weight of a binder, from 0.01% to 50% by weight of at least one layered double hydroxide salt as set forth in claims 1 to 7, and, if desired, from 0.001 % to 50% by weight of a colorant, based in each case on the total weight of the electrophotographic toner, powder or powder coating material.

## Revendications

1. Utilisation de sels hydroxydes doubles à couches comme agent de réglage de la charge dans des toners et des révélateurs électrophotographiques, dans des laques en poudre, des matériaux d'électret et dans des processus de séparation électrostatiques de matériaux chargeables, **caractérisée en ce que** le sel hydroxyde double contient des cations métalliques monovalents ou divalents ou un mélange de ceux-ci ainsi que des cations métalliques trivalents ainsi que des anions organiques A présentant les formules suivantes 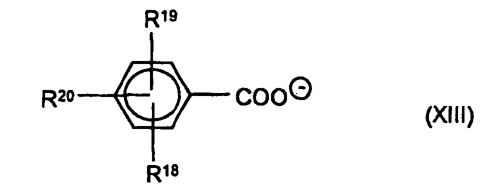 où R¹⁸, R¹⁹ et R²⁰ sont identiques ou différents et signifient hydrogène, C₁-C₂₂-alkyle, C₁-C₁₈-alcényle, C₁-C₁₈-alcoxy ; 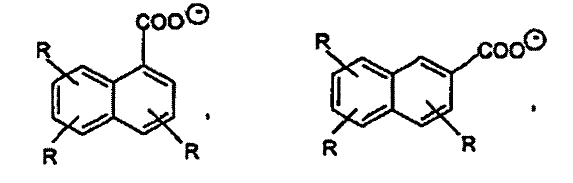 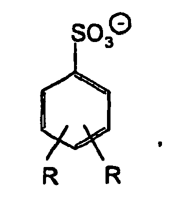 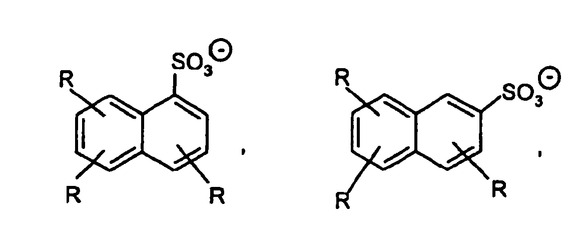 où R signifie hydrogène, C₁-C₄-alkyle, C₁-C₄-alcoxy ou halogène, ainsi que la formule (XXII) 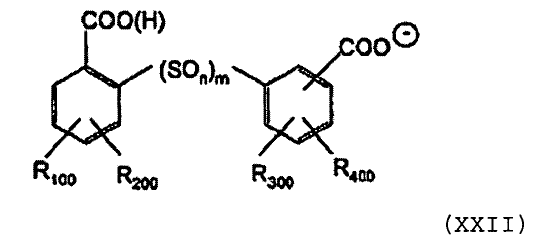 où n = 0-2, m = 1-5 et
où les radicaux R₁₀₀ à R₄₀₀ sont identiques ou différents et signifient hydrogène, C₁-C₂₂-alkyle, C₁-C₁₈-alcényle, C₁-C₁₈-alcoxy, hydroxy-(C₁-C₁₈)alkylène, amino-(C₁-C₁₈)-alkylène, C₁-C₁₈-alkylimino, carboxy, carboxy(C₁-C₁₈)-alkylène, hydroxy, amino, nitro, cyano, sulfo, halogène, C₁-C₁₈-acyle, C₁-C₁₈-halogénoalkyle, C₁-C₁₈-alkylcarbonyle, C₁-C₁₈-alkylcarbonyloxy, C₁-C₁₈-alcoxycarbonyle, C₁-C₁₈-alkylaminocarbonyle, C₁-C₁₈-alkylcarbonylimino, C₆-C₁₀-arylcarbonyle, aminocarbonyle, aminosulfonyle, C₁-C₁₈-alkylaminosulfonyle, phényle, naphtyle, hétéroaryle.

2. Utilisation selon la revendication 1, **caractérisée en ce qu'**on utilise comme anion organique un anion des acides suivants : acide benzoïque, acide naphtoïque, acide 4-tert-butylbenzoïque, acide benzènesulfonique, acide p-toluènesulfonique, acide naphtalènesulfonique, acide 2,2'-dithiobenzoïque.

3. Utilisation selon la revendication 1 ou 2, **caractérisée en ce que** le nombre de groupes hydroxy représente environ 1,8 à 2,2 fois la somme de tous les cations métalliques.

4. Utilisation selon au moins l'une quelconque des revendications 1 à 3, **caractérisée en ce que** les cations métalliques monovalents qui sont contenus sont ceux du groupe Li⁺, Na⁺ et K⁺, les cations métalliques divalents qui sont contenus sont ceux du groupe Mg²⁺, Ca²⁺, Zn²⁺, Co²⁺, Ni²⁺, Fe²⁺, Cu²⁺ et Mn²⁺ les cations métalliques trivalents qui sont contenus sont ceux du groupe Al³⁺, Fe³⁺, Co³⁺, Mn³⁺, Ni³⁺, Cr³⁺ et B³⁺.

5. Utilisation selon au moins l'une quelconque des revendications 1 à 4, **caractérisée en ce que** les sels hydroxydes doubles contiennent Mg²⁺ et Al³⁺.

6. Utilisation selon la revendication 5, **caractérisée en ce que** le rapport molaire Mg²⁺:Al³⁺ est de 3,1:1 à 1:2.

7. Utilisation selon au moins l'une quelconque des revendications 1 à 6, **caractérisée en ce que** le sel hydroxyde double est une hydrotalcite calcinée.

8. Utilisation selon au moins l'une quelconque des revendications 1 à 7, **caractérisée en ce que** le sel hydroxyde double est utilisé en combinaison avec un ou plusieurs autres agents de réglage de la charge du groupe formé par les triphénylméthanes ; les composés d'ammonium et d'immonium, les composés d'iminium ; les composés d'ammonium et d'immonium fluorés ; les amides d'acides dicationiques ; les composés d'ammonium polymères ; les composés de diallylammonium ; les dérivés d'arylsulfure, les dérivés de phénol ; les composés de phosphonium et les composés de phosphonium fluorés ; les calix(n)arènes, les oligosaccharides liés par les cycles (cyclodextrines) et leurs dérivés, en particulier les dérivés d'ester de bore, les complexes interpolyélectrolytiques (IPEC) ; les sels de polyester ; les composés métalliques complexes, en particulier les complexes métalliques de salicylate et non métalliques de salicylate, les sels de silicates structurés ioniques, les complexes métalliques d'acides hydroxycarboxyliques et les complexes non métalliques d'acides hydroxycarboxyliques, les benzimidazolones ; les azines, les thiazines ou les oxazines, qui sont indiquées dans le Colour Index sous les dénominations Pigments, Solvent Dyes, Basic Dyes ou Acid Dyes.

9. Utilisation selon au moins l'une quelconque des revendications 1 à 8 en une concentration de 0,01 à 50% en poids, par rapport au poids total du toner, du révélateur, de la laque, de la laque en poudre, du matériau d'électret ou des matériaux à séparer électrostatiquement.

10. Toner électrophotographique, poudre ou laque en poudre contenant 30 à 99,99% en poids d'un liant, 0,01 à 50% en poids d'au moins un sel hydroxyde double à couches selon les revendications 1 à 7 et le cas échéant 0,001 à 50% en poids, d'un colorant, à chaque fois par rapport au poids total du toner électrophotographique, de la poudre ou de la laque en poudre.
